# EUROPEAN PATENT SPECIFICATION

(11) **EP 2 984 937 B1**
(45) Date of publication and mention of the grant of the patent: **30.05.2018**
(21) Application number: 14775666.2
(22) Date of filing: 24.03.2014
(51) Int. Cl.: A23L 7/109, A23L 35/00, A23L 33/185

(54) **PROCESS FOR PRODUCING FROZEN GRATIN**
VERFAHREN ZUR HERSTELLUNG VON GEFRORENEM GRATIN
PROCÉDÉ DE PRODUCTION D'UN GRATIN SURGELÉ

(30) Priority: 25.03.2013 JP 2013061790
(43) Date of publication of application: 17.02.2016
(73) Proprietor: Nisshin Foods Inc., Tokyo 101-8441 (JP)
(72) Inventor: YAMAGUCHI, Hitomi, Fujimino-shi Saitama 356-8511 (JP); SUGA, Youhei, Fujimino-shi Saitama 356-8511 (JP); WATANABE, Takenori, Fujimino-shi Saitama 356-8511 (JP); MIYA, Youichiro, Fujimino-shi Saitama 356-8511 (JP)
(74) Representative: Forstmeyer, Dietmar
(86) International application number: PCT/JP2014/057984
(87) International publication number: WO 2014/157035

(56) References cited:
- EP-A1- 2 796 057
- EP-A1- 3 050 439
- WO-A1-2013/094724
- WO-A1-2013/191136
- JP-A- H0 970 272
- JP-A- S6 413 977
- JP-A- H09 220 077
- JP-A- 2013 048 641
- US-A- 5 139 808
- DATABASE WPI Week 200228 Thomson Scientific, London, GB; AN 2002-221201 XP002763199, -& JP 2001 346533 A (NIPPON FLOUR MILLS CO LTD) 18 December 2001 (2001-12-18)

## Description

### Technical Field

The present invention relates to a method for producing a frozen gratin. More specifically, the present invention relates to a method for producing a frozen gratin that can be stored for a long period of time in a frozen state after being cooked, and that offers excellent texture and outer appearance, like that of just-boiled fresh pasta, simply by being thawed.

### Background Art

Gratin is a general name for food products in which ingredients are immersed in a sauce and heated and cooked in this state. Gratin is popular because of its good taste/flavor; however, it takes time and effort to cook and is unsuitable to produce in small amounts, and thus, already-cooked frozen gratins are commercially available so that they can be consumed easily at home. Conventional already-cooked gratin products are provided by: filling a container with boiled pasta, such as macaroni, together with a sauce; and freezing the pasta and sauce as-is or after baking. In such conventional products, moisture from the sauce transfers to the macaroni during frozen storage or during thawing, which causes the macaroni to soften. Thus, the gratin/macaroni suffers from lack of texture.

To overcome this problem, Patent Literature 1 discloses a chilled gratin prepared by: cooling boiled pasta; filling a container with a mixture of the cooled pasta and 10 to 100 mass% of a sauce having the same temperature; and topping the rest of the sauce on the mixture. Patent Literature 2 discloses the production of a frozen gratin by using rice or pasta coated with a dairy product or with an emulsion including casein or gelatin as its component. Unfortunately, even these techniques cannot sufficiently prevent the softening of the texture of pasta, which is an ingredient of gratin.

### Citation List

### Patent Literature

Patent Literature 1: JP 2005-185230A
Patent Literature 2: JPH09-220077A

US 5,139,808 discloses a process for the production of a frozen pasta product, comprising cooking a shaped pasta dough, partially drying the cooked pasta, blending the partially dried pasta with a sauce or water or a combination thereof and then freezing the blend.

### Summary of Invention

An objective of the invention is to provide a frozen gratin production method that can solve the problem of the aforementioned conventional art.

The present invention provides a method for producing a frozen gratin according to claim 1, involving:
obtaining fresh pasta by extruding a dough including durum wheat flour at a pressure of from 9.807 to 19.614 MPa (100 to 200 kgf/cm²);
boiling and cooking the fresh pasta; and then
freezing the boiled-and-cooked fresh pasta together with a sauce.

### Description of Embodiments

The present invention is described below according to preferred embodiments thereof. As a result of extensive research to solve the aforementioned problem, Inventors have found that, by using, as an ingredient, fresh pasta produced by extruding, at a high pressure, a dough employing a specific raw material flour, the fresh pasta does not soften even when it is stored together with a sauce for a long period of time, thus achieving the present invention. More specifically, a frozen gratin is produced by: producing a dough by adding kneading water to durum wheat flour and kneading the mixture; producing fresh pasta by extruding the dough at a high pressure of from 9.807 to 19.614 MPa (100 to 200 kgf/cm²); boiling and cooking the fresh pasta; and then freezing the boiled-and-cooked pasta together with a sauce. In this way, even if the frozen gratin is thawed and consumed after being frozen and stored for a long period of time, the pasta has toughness and resilience like that of just-boiled fresh pasta and is in harmony with the sauce, and the gratin exhibits extremely good texture.

Examples of ingredients used in the frozen gratin production method of the invention include various pastas ordinarily used in gratins, such as macaroni and penne. In addition to such pastas, other ingredients ordinarily used in gratins, such as meat and/or vegetables, may also be included.

One of the characteristics of the pasta used in the frozen gratin production method of the present invention is that it is produced according to the method of claim 1. Flour including durum wheat flour as a main component is used as the raw material flour. Durum wheat flour is flour obtained by pulverizing the endosperm part of wheat of the durum species, and is finer than semolina flour that remains on a sieve with a mesh size of 210 µm. The grain size of the durum wheat flour is, in average grain size, from 50 to 300 µm, and even more preferably from 50 to 200 µm. By setting the average grain size to 300 µm or less, the proportion of semolina flour can be reduced. In contrast, if the pasta used for the present invention is produced by using semolina flour, a larger amount of moisture from the sauce will transfer to the pasta when the pasta is frozen together with the sauce during production because the grains of semolina flour are coarse, and texture will deteriorate. In the present Description, the average grain size of durum wheat flour is the value at a cumulative volume of 50% when measured according to the laser diffraction/scattering measurement method, e.g., measured by using Microtrac MT 3000II (from Nikkiso Co., Ltd.).

In addition to the durum wheat flour serving as the raw material, it is preferable to blend a vegetable protein to the dough of the pasta used in the frozen gratin production method of the present invention, because the tough and resilient texture is improved. Examples of vegetable proteins include gluten (glutenin and gliadin) included in wheat, kafirin included in sorghum, and zein included in corn. Among the above, it is particularly preferable to use gluten. The amount of vegetable protein(s) to blend with 100 parts by mass of the durum wheat flour is preferably from 2 to 6 parts by mass, more preferably from 4 to 6 parts by mass. By setting the blending amount to 2 parts by mass or greater, improvement in pasta texture is perceived more easily. Further, by setting the blending amount to 6 parts by mass or less, it is possible to effectively prevent the pasta from getting too hard.

As for the raw materials of the pasta dough, in addition to durum wheat flour and vegetable protein(s), it is possible to blend other raw materials ordinarily used in the production of pastas, such as wheat flour other than durum wheat flour, durum semolina flour, starches, sugars, eggs, table salt, oils and fats, emulsifiers, and/or thickeners. The blending amount of the aforementioned other raw material(s) may be from 0 to 30 parts by mass with respect to 100 parts by mass of the durum wheat flour.

In the present invention, fresh pasta is produced by using the aforementioned dough. More specifically, water is added to the aforementioned raw material(s) and the mixture is kneaded into a dough, and fresh pasta is produced by directly extruding the dough at a high pressure. Herein, "directly" means that the dough obtained by kneading is extruded at a high pressure without being subjected to other operations. Examples of other operations include extrusion at a low pressure (below 9,807 MPa (100 kgf/cm²)). Examples of kneading water that is used to produce the dough include water, salt water, and brine, and any type of water ordinarily used for the production of pastas/noodles may be used. Considering the fact that a high extrusion pressure is applied to the obtained dough as described further below, the amount of kneading water added to 100 parts by mass of raw material flour(s) is preferably from 15 to 35 parts by mass, more preferably from 18 to 35 parts by mass.

In the present invention, fresh pasta is obtained by directly extruding the aforementioned dough at a pressure of from 9.807 to 19.614 MPa (100 to 200 kgf/cm²), more preferably from 11.768 to 15.691 MPa (120 to 160 kgf/cm²). Conventionally, the above pressure range has been employed for producing dried pastas, but fresh pasta has never been produced by extruding dough by directly applying such a high pressure. The production method of the present invention is prominently characteristic in this regard. The degree of pressure reduction during extrusion is preferably from -200 mmHg to vacuum, more preferably from -600 mmHg to vacuum.

The high-pressure extrusion may be performed by using an extruder (pasta production machine) that includes, for example: a cylinder; a screw arranged inside the cylinder; and a die attached to one end of the cylinder. Using an extruder having such a structure, dough is supplied into the cylinder in a state where the screw is rotating about its axis inside the cylinder. The supplied dough is subjected to high-pressure compression between the cylinder's inner wall and the screw. The pressure of the dough inside the cylinder can be measured by a pressure meter provided to the extruder. The dough inside the cylinder is heated by friction, and thus, from the viewpoint of dough quality, it is preferable to keep the temperature of the dough inside the cylinder constant by cooling the cylinder.

The dough inside the cylinder is kneaded and pushed forward by the rotation of the screw, and is extruded continuously from holes provided in the die attached to one end of the cylinder. By varying the shape of the holes in the die, it is possible to produce fresh pastas in various shapes. It should be noted that, in the preparation process of fresh pasta in the present invention, the dough obtained by kneading the raw material(s) only needs to be extruded at a high pressure to be formed into fresh pasta; therefore, the pasta-forming step needs to be performed only once. In other words, according to the present invention, the kneading step and the pasta-forming step need not be performed twice or more, meaning that a further kneading nor a further pasta-forming step of the dough once extruded and formed into pasta is unnecessary.

In the present invention, the shape of the fresh pasta is not particularly limited, and it is possible to adopt any shape that is ordinarily used for gratins and that can be produced by extrusion. Examples include short pasta shapes such as macaroni, rigatoni, fusilli, and penne. In the high-pressure extrusion of fresh pasta, it is preferable to perform extrusion/production such that the fresh pasta has a thickness of from 1.0 to 1.8 mm, more preferably from 1.2 to 1.6 mm. By producing the fresh pasta with such a thickness, it is possible to effectively prevent texture from significantly deteriorating in cases where the pasta is stored together with a sauce. Herein, "thickness" refers to: the diameter (if the cross section is circular) or the thickness (if the cross section is flat) for solid pasta; and the thickness for tubular pasta. Further, for pasta having a tubular short-pasta shape such as macaroni, the diameter of the tubular cross section is preferably from 4 to 10 mm, more preferably from 6 to 10 mm.

The fresh pasta obtained according to the aforementioned method is boiled and cooked as-is, without being subjected to other special steps, such as drying. Stated differently, the fresh pasta is boiled and cooked directly. Any ordinary boiling method may be employed for boiling and cooking the fresh pasta; generally, the fresh pasta is boiled and cooked in boiling water for 2 to 8 minutes. It is preferable that the pasta used in the present invention is boiled and cooked such that the yield-after-boiling is preferably from about 190% to 250%, more preferably from about 210% to 220%. In this way, it is possible to effectively prevent texture from significantly deteriorating when the boiled-and-cooked pasta is stored together with a sauce. The boiled-and-cooked pasta is drained and cooled as necessary, and is then subjected to a freezing process together with a sauce. Alternatively, the pasta used in the present invention may be boiled and cooked in a sauce. The pasta produced according to the aforementioned high-pressure extrusion is less likely to soften by absorbing an excessive amount of sauce or moisture from sauce, and thus, the pasta can be cooked easily by using a sauce for boiling and cooking. From the viewpoint of the yield-after-boiling of the pasta and the viewpoint of appropriately adjusting the later-described quantitative relationship between the pasta and sauce, it is preferable to boil and cook the pasta separately from a sauce.

The proportions of the boiled-and-cooked pasta and a sauce may be proportions ordinarily employed for gratins. For example, about 200 to 300 parts by mass of sauce is used with respect to 100 parts by mass of boiled pasta.

The boiled-and-cooked pasta is frozen together with a sauce. If necessary, baking is performed before freezing. Baking is performed preferably at a temperature from 180°C to 250°C, more preferably from 200°C to 230°C. It is preferable that the baking time is from 5 to 20 minutes, more preferably from 7 to 15 minutes, in the aforementioned baking temperature range. An oven, for example, may be used for baking.

As for the present freezing process, any freezing process ordinarily employed for frozen gratins may be employed. For example, it is preferable to: preliminarily cool the boiled-and-cooked pasta as necessary; portion out a predetermined amount, for example, from 50 to 160 g per serving onto a tray, etc.; fill the tray with a sauce; bake the gratin to brown the surface; and then subject to the baked gratin to a freezing process. Alternatively, the boiled-and-cooked pasta may be mixed with a sauce, and then be dished on a tray, etc. For the freezing process, either quick-freezing or slow-freezing may be employed. It is preferable to employ quick-freezing. Once the gratin has been frozen by quick-freezing, the frozen gratin may be stored under ordinary frozen storage conditions.

Any ordinary gratin sauce may be used as the sauce to be frozen together with the boiled-and-cooked pasta. Examples include, but are not limited to: white sauce, such as cream sauce and carbonara sauce; tomato-based sauce, such as meat sauce, Neapolitan-style sauce, and arrabbiata sauce; and brown sauce.

When eating the frozen-and-stored gratin of the present invention, it is preferable to subject the gratin to a heating process. Examples of the heating process include cooking in an oven, a microwave oven, or a steam oven, and steaming.

### Examples

The present invention is described in further detail below by way of examples. The scope of the invention, however, is not limited to the examples. Unless particularly stated otherwise, "parts" refer to "parts by mass".

### Reference Example:

The endosperm part of seeds of durum wheat is pulverized and then sieved, to produce durum wheat flour having an average grain size of 140 µm.

### Examples 1 to 5 and Comparative Examples 1 and 2:

Twenty five (25) parts of water was added to 100 parts of the durum wheat flour of the Reference Example and the mixture was kneaded, to prepare a dough. By using a pasta production machine having a macaroni-forming die attached thereto, the dough was extruded under a reduced-pressure condition of -600 mmHg under each of the following pressure conditions, to obtain seven types of fresh macaroni (diameter: 8 mm; thickness: 1.2 mm): 8.826 MPa (90 kgf/cm²), 9.807 MPa (100 kgf/cm²), 11.768 MPa (120 kgf/cm²), 13.729 MPa (140 kgf/cm²), 15.691 MPa (160 kgf/cm²), 19.614 MPa (200 kgf/cm²), and 20.594 MPa (210 kgf/cm²).

Each type of fresh macaroni obtained as above was boiled in boiling water for 5 minutes to a yield of 220%, and then the macaroni was cooled in water, to produce boiled macaroni.

Sixty five (65) grams of each type of boiled macaroni was portioned out onto a waterproof paper tray (140 mm in diameter, 5 cm in depth), and then, 150 g of a commercially available retort-pouch gratin sauce (product from Nisshin Foods Inc.) was spread over the dished-out macaroni (230 parts of the sauce with respect to 100 parts of the boiled macaroni). Each gratin was baked in an oven at 200°C for 1 minute, to produce a cooked gratin. Each cooked gratin was quick-frozen at -35°C, to produce respective frozen cooked gratins of Examples 1 to 5 and Comparative Examples 1 and 2.

### Test Example 1:

The frozen cooked gratins of Examples 1 to 5 and Comparative Examples 1 and 2 were each packaged in an aluminum bag, and stored at -18°C. After one week, each gratin was taken out from the bag, and was heated and thawed with a microwave oven (600 W). The heating time was set to 6 minutes. The outer appearance of each thawed gratin was evaluated. Also, one piece of macaroni was taken out from each gratin and the sauce was removed therefrom, and the texture of the macaroni was evaluated. Also, the texture of the gratin was evaluated.

As Comparative Example 3, a frozen cooked gratin was produced in the same way as in Examples 1 to 5 and Comparative Examples 1 and 2 by using commercially available dried macaroni (product from Nisshin Foods Inc.; diameter: 6 mm; thickness: 1 mm) which was boiled in boiling water to a yield of 220%; and Comparative Example 3 was subjected to the same evaluations.

The evaluation results are shown in Table 1 below. The evaluations were performed by 10 panelists according to the evaluation criteria shown in Table 2, and the average mark was found for each evaluation.

**[Table 1]**

| | Comp. Example 1 | Example 1 | Example 2 | Example 3 | Example 4 | Example 5 | Comp. Example 2 | Comp. Example 3 |
|---|---|---|---|---|---|---|---|---|
| Extrusion pressure MPa (kgf/cm²) | 8.826 (90) | 9.807 (100) | 11.768 (120) | 13.729 (140) | 15.691 (160) | 19.614 (200) | 20.594 (210) | |
| Texture of macaroni | 2.8 | 3.5 | 4.1 | 4.5 | 4.3 | 3.6 | 2.5 | 1.6 |
| Appearance of gratin | 2.7 | 3.1 | 4.0 | 4.4 | 4.3 | 3.7 | 3.0 | 2.4 |
| Texture of gratin | 2.2 | 3.4 | 4.3 | 4.5 | 4.4 | 3.5 | 2.1 | 1.5 |

**[Table 2]**

| | | |
|---|---|---|
| Texture of macaroni | 5 | Has sufficient toughness and resilience like fresh pasta, and extremely good texture |
| | 4 | Has toughness and resilience like fresh pasta, and good texture |
| | 3 | Relatively tough and resilient, and there is no problem in texture |
| | 2 | Somewhat too soft, or somewhat too hard, and lacks texture of fresh pasta |
| | 1 | Too soft, or too hard, and lacks texture of fresh pasta |
| Appearance of gratin | 5 | Good marriage between sauce and macaroni, and looks very good |
| | 4 | Macaroni is covered well with sauce |
| | 3 | Macaroni is covered moderately with sauce |
| | 2 | Macaroni is covered poorly, or unevenly, with sauce |
| | 1 | Macaroni is covered poorly with sauce, and macaroni and sauce look separate |
| Texture of gratin | 5 | Has sufficient toughness and resilience, is in harmony with sauce, and has extremely good texture |
| | 4 | Has toughness and resilience, and has good texture together with sauce |
| | 3 | Relatively tough and resilient, and has normal texture |
| | 2 | Somewhat too soft, or somewhat too hard, and has somewhat poor texture |
| | 1 | Too soft, or too hard, and has poor texture |

### Production Examples 1 to 6:

Frozen cooked gratins of Production Examples 1 to 6 were produced according to the same procedure as in Example 3 (extrusion pressure: 13.729 MPa (140 kgf/cm²)), except that the macaroni was boiled and cooked by changing the yield-after-boiling as shown in Table 3.

By using the frozen cooked gratins of Production Examples 1 to 6, the macaroni texture and the outer appearance and texture of each gratin after being thawed according to the same procedure as in Test Example 1 were evaluated. The results are shown in Table 3. Table 3 also shows the results of Example 3.

**[Table 3]**

| | Production Example 1 | Production Example 2 | Production Example 3 | Example 3 | Production Example 4 | Production Example 5 | Production Example 6 |
|---|---|---|---|---|---|---|---|
| Yield after boiling (%) | 180 | 190 | 210 | 220 | 230 | 250 | 260 |
| Texture of macaroni | 2.3 | 3.8 | 4.6 | 4.5 | 3.7 | 2.9 | 1.8 |
| Appearance of gratin | 1.9 | 3.3 | 4.6 | 4.4 | 3.5 | 2.7 | 1.9 |
| Texture of gratin | 2.3 | 3.6 | 4.7 | 4.5 | 3.5 | 3.0 | 2.2 |

### Production Examples 7 to 12:

Frozen cooked gratins of Production Examples 7 to 12 were produced according to the same procedure as in Example 3 (extrusion pressure: 13.729 MPa (140 kgf/cm²)), except that the macaroni used for each example included, as raw material flour for the macaroni, respective amounts of gluten as shown in Table 4 with respect to 100 parts by mass of durum wheat flour.

By using the frozen cooked gratins of Production Examples 7 to 12, the macaroni texture and the outer appearance and texture of each gratin after being thawed according to the same procedure as in Test Example 1 were evaluated. The results are shown in Table 4. Table 4 also shows the results of Example 3.

**[Table 4]**

| | Example 3 | Production Example 7 | Production Example 8 | Production Example 9 | Production Example 10 | Production Example 11 | Production Example 12 |
|---|---|---|---|---|---|---|---|
| Parts by mass of gluten to 100 parts by mass of durum wheat flour | 0 | 1 | 2 | 4 | 6 | 8 | 10 |
| Texture of macaroni | 4.5 | 4.5 | 4.7 | 4.9 | 4.8 | 4.2 | 3.5 |
| Appearance of gratin | 4.4 | 4.4 | 4.6 | 4.8 | 4.8 | 4.6 | 3.8 |
| Texture of gratin | 4.5 | 4.4 | 4.7 | 4.8 | 4.8 | 4.1 | 3.3 |

### Production Examples 13 to 17:

Frozen cooked gratins of Production Examples 13 to 17 were produced according to the same procedure as in Example 3 (extrusion pressure: 13.729 MPa (140 kgf/cm²)), except that the diameter of the extruded macaroni (thickness: 1.2 mm) was changed as shown in Table 5.

By using the frozen cooked gratins of Production Examples 13 to 17, the macaroni texture and the outer appearance and texture of each gratin after being thawed according to the same procedure as in Test Example 1 were evaluated. The results are shown in Table 5. Table 5 also shows the results of Example 3.

**[Table 5]**

| | Production Example 13 | Production Example 14 | Production Example 15 | Example 3 | Production Example 16 | Production Example 17 |
|---|---|---|---|---|---|---|
| Diameter of macaroni (mm) | 2.5 | 4 | 6 | 8 | 10 | 12 |
| Texture of macaroni | 2.9 | 3.3 | 4.3 | 4.5 | 3.8 | 2.5 |
| Appearance of gratin | 2.8 | 3.2 | 4.2 | 4.4 | 3.9 | 2.5 |
| Texture of gratin | 3.5 | 3.8 | 4.2 | 4.5 | 3.8 | 2.2 |

### Production Examples 18 to 23:

Frozen cooked gratins of Production Examples 18 to 23 were produced according to the same procedure as in Example 3 (extrusion pressure: 13.729 MPa (140 kgf/cm²)), except that the thickness of the extruded macaroni (diameter: 8 mm) was changed as shown in Table 6.

By using the frozen cooked gratins of Production Examples 18 to 23, the macaroni texture and the outer appearance and texture of each gratin after being thawed according to the same procedure as in Test Example 1 were evaluated. The results are shown in Table 6. Table 6 also shows the results of Example 3.

**[Table 6]**

| | Production Example 18 | Production Example 19 | Example 3 | Production Example 20 | Production Example 21 | Production Example 22 | Production Example 23 |
|---|---|---|---|---|---|---|---|
| Thickness of macaroni (mm) | 0.8 | 1.0 | 1.2 | 1.4 | 1.6 | 1.8 | 2.0 |
| Texture of macaroni | 2.9 | 3.8 | 4.5 | 4.3 | 4.1 | 3.7 | 2.5 |
| Appearanc e of gratin | 3.0 | 4.0 | 4.4 | 4.4 | 3.9 | 3.4 | 3.3 |
| Texture of gratin | 2.8 | 3.6 | 4.5 | 4.2 | 3.9 | 3.3 | 2.4 |

### Production Examples 24 to 28:

Frozen cooked gratins of Production Examples 24 to 28 were produced according to the same procedure as in Example 3 (extrusion pressure: 13.729 MPa (140 kgf/cm²)), except that the amount of sauce to be spread over the boiled macaroni was changed as shown in Table 7.

By using the frozen cooked gratins of Production Examples 24 to 28, the macaroni texture and the outer appearance and texture of each gratin after being thawed according to the same procedure as in Test Example 1 were evaluated. The results are shown in Table 7. Table 7 also shows the results of Example 3.

**[Table 7]**

| | Production Example 24 | Production Example 25 | Example 3 | Production Example 26 | Production Example 27 | Production Example 28 |
|---|---|---|---|---|---|---|
| Parts by mass of sauce to 100 parts by mass of boiled macaroni | 150 | 200 | 230 | 250 | 300 | 350 |
| Texture of macaroni | 3.2 | 4.7 | 4.5 | 4.6 | 4.2 | 3.6 |
| Appearance of gratin | 1.8 | 4.6 | 4.4 | 4.6 | 3.8 | 2.5 |
| Texture of gratin | 3.1 | 4.7 | 4.5 | 4.6 | 4.1 | 3.4 |

### Industrial Applicability

According to the present invention, it is possible to produce a frozen gratin that can be stored for a long period of time in a frozen state after being cooked, and that offers excellent texture and outer appearance, like those of just-boiled fresh pasta, simply by being thawed.

## Claims

1. A method for producing a frozen gratin, comprising:
obtaining fresh pasta by preparing a dough using durum wheat flour having an average grain size of from 50 to 300 µm as a raw material and extruding the durum wheat flour containing dough at a pressure of from 9.807 to 19.614 MPa (100 to 200 kgf/cm²);
boiling and cooking the fresh pasta; and then
freezing the boiled-and-cooked fresh pasta together with a sauce.

2. The frozen gratin production method according to claim 1, wherein a dough including from 2 to 6 parts by mass of a vegetable protein with respect to 100 parts by mass of the durum wheat flour is used as said dough.

3. The frozen gratin production method according to claims 1 or 2, wherein the fresh pasta is boiled and cooked such that the yield-after-boiling of the fresh pasta is from 190% to 250%.

4. The frozen gratin production method according to any one of claims 1 to 3, wherein extrusion is performed such that the fresh pasta has a thickness of from 1.0 to 1.8 mm.

## Patentansprüche

1. Verfahren zur Herstellung eines gefrorenen Gratins, welches umfasst:
das Erhalten frischer Teigwaren, indem ein Teig unter Verwendung von Hartweizenmehl, das eine durchschnittliche Korngröße von 50 bis 300 µm aufweist, als Rohmaterial hergestellt wird und der Teig, der das Hartweizenmehl enthält, bei einem Druck von 9,807 bis 19,614 MPa (100 bis 200 kgf/cm²) extrudiert wird;
das Sieden und Kochen der frischen Teigwaren; und dann
das Gefrieren der gesiedeten und gekochten frischen Teigwaren zusammen mit einer Soße.

2. Das Verfahren zur Herstellung von gefrorenem Gratin nach Anspruch 1, wobei als Teig ein Teig verwendet wird, der 2 bis 6 Gewichtsteile eines pflanzlichen Proteins in Bezug auf 100 Gewichtsteile des Hartweizenmehls enthält.

3. Das Verfahren zur Herstellung von gefrorenem Gratin nach einem der Ansprüche 1 oder 2, wobei die frischen Teigwaren so gesiedet und gekocht werden, dass die Ausbeute nach dem Kochen der frischen Teigwaren von 190 % bis 250 % beträgt.

4. Das Verfahren zur Herstellung von gefrorenem Gratin nach einem der Ansprüche 1 bis 3, wobei die Extrusion auf eine solche Weise durchgeführt wird, dass die frischen Teigwaren eine Dicke von 1,0 bis 1,8 mm aufweisen.

## Revendications

1. Procédé de production d'un gratin congelé, comprenant :
l'obtention d'une pâte fraîche par préparation d'une pâte à l'aide d'une farine de blé dur ayant une taille de grain moyenne de 50 à 300 µm à titre de matière première et extrusion de la pâte contenant la farine de blé dur à une pression de 9,807 à 19,614 MPa (100 à 200 kgf/cm²) ;
la portée à ébullition et la cuisson de la pâte fraîche ; puis
la congélation de la pâte fraîche portée à ébullition et cuite avec une sauce.

2. Procédé de production d'un gratin congelé selon la revendication 1, dans lequel une pâte contenant de 2 à 6 parties en poids d'une protéine végétale pour 100 parties en poids de farine de blé dur est utilisée à titre de ladite pâte.

3. Procédé de production d'un gratin congelé selon les revendications 1 ou 2, dans lequel la pâte fraîche est portée à ébullition et cuite de façon que le rendement après ébullition de la pâte fraîche soit de 190 % à 250 %.

4. Procédé de production d'un gratin congelé selon l'une quelconque des revendications 1 à 3, dans lequel l'extrusion est effectuée de façon que la pâte fraîche ait une épaisseur de 1,0 à 1,8 mm.
